# EUROPÄISCHE PATENTANMELDUNG

(11) **EP 2 439 053 A1**
(43) Veröffentlichungstag der Anmeldung: **11.04.2012**
(21) Anmeldenummer: 12150312.2
(22) Anmeldetag: 08.01.2008
(51) Int. Cl.: B29C 65/02, B29C 65/08, B65B 19/34, B65B 51/04, B31B 1/90, B29C 65/74, B32B 27/34

(54) **Vorrichtung zum Anbringen einer Aufreißlasche auf einer Lebensmittel- oder Chemieverpackung aus Kunststoffolie**

(30) Priorität: 01.02.2007 DE 102007005911
(62) Teilanmeldung aus: 08701287.8
(71) Anmelder: Frans Vermee GmbH, 53424 Remagen (DE)
(72) Erfinder: Vermee, Frans, 53424 Remagen (DE); Wihl, Klaus, 53424 Remagen (DE)
(74) Vertreter: von Kreisler Selting Werner

(57) **Zusammenfassung**

Eine Vorrichtung zu Anbringen einer Lasche (14) auf einer Lebensmittel- oder Chemieverpackung aus Kunststofffolie weist eine Schweißvorrichtung (30) zum Erzeugen einer Schweißnaht (40) auf. Durch Vorsehen eines Verdrängungselements (32), das einer Sonotrode (30) gegenüberliegend angeordnet ist, erfolgt das Herstellen einer Trennnaht (38). Hierdurch wird eine Aufreißlasche (14) auf einer Verpackungshülle (10) aufgebracht.

## Beschreibung

Die Erfindung betrifft eine Vorrichtung zum Anbringen einer Aufreißlasche auf einer Lebensmittel- oder Chemieverpackung aus Kunststofffolie sowie eine Lebensmittel- oder Chemieverpackung aus Kunststofffolie.

Es ist bekannt, Lebensmittel wie beispielsweise Wurst in Kunststoffhüllen zu verpacken. Hierzu wird aus einer ebenen Kunststoffverbundfolie durch Verschweißen ein Kunststoffschlauch hergestellt, der sodann mit dem Lebensmittel gefüllt wird. Die Schlauchenden werden üblicherweise mit Aluminiumclips verschlossen. Die Kunststoffverbundfolien sind üblicherweise dreischichtig und weisen eine innenliegende Sperrschicht auf, die von zwei Siegelschichten bedeckt ist. Die Siegelschichten sind erforderlich um aus einer flachen Kunststoffverbundfolie durch Schweißen einen Kunststoffschlauch herzustellen. Hierzu wird eine in Längsrichtung des Schlauchs verlaufende Siegelnaht durch Verschmelzen der beiden Siegelschichten hergestellt. Als Sperrschicht ist es bekannt PVDC (Polyvinylidenchorid)-Material zu verwenden. Um die Lebensmittelverpackung einfach öffnen zu können, ist es bekannt, mit der Lebensmittelverpackung Aufreißlaschen zu verbinden. Bei Verwendung einer PVDC-Folie als Verpackungshülle ist es bekannt, eine Aufreißlasche durch Verschweißen mit der Verpackungshülle zu verbinden. Zum Verschweißen wird hierbei ein Hochfrequenz-Generator verwendet.

Die Verwendung von PVDC-Folien weist den Nachteil auf, dass Bestandteile dieser Folien (z.B Weichmacher) in das Produkt migrieren können. Das in das Lebensmittel migrierte Produkt ist gesundheitsschädlich und ggf. sogar krebserregend.

Aufgabe der Erfindung ist es, eine Vorrichtung zum Anbringen einer Aufreißlasche auf einer Lebensmittel- oder Chemieverpackung aus Kunststofffolie zu schaffen, mit der auch PVDC-freie Folien verarbeitet werden können.

Die Lösung der Aufgabe erfolgt erfindungsgemäß durch eine Vorrichtung gemäß Anspruch 1.

Die erfindungsgemäße Vorrichtung zum Anbringen einer Aufreißlasche auf einer Lebensmittel- oder Chemieverpackung aus Kunststofffolie weist eine Schweißvorrichtung auf. Die Schweißvorrichtung umfasst einen Wellengenerator. In bevorzugter Ausführungsform erfolgt ein Schweißen mit Hilfe von Ultraschallwellen. Hierzu werden zunächst durch einen Generator elektrische Schwingungen erzeugt, die von einem Konverter, der insbesondere einen Piezokristall aufweist, in Ultraschallwellen konvertiert wird. Ferner weist die bevorzugte Ausführungsform der Schweißvorrichtung eine Sonotrode auf, die die Schallwellen verstärkt. Vorzugsweise dient eine Sonotrode auf Grund ihrer Oberflächegestaltung zusätzlich zur Ausführung einer ebenen Schweißfläche.

Mit Hilfe der Schweißvorrichtung wird eine Schweißnaht erzeugt, durch die die Aufreißlasche mit der die Verpackungshülle ausbildenden Kunststofffolie verbunden wird. Ferner weist die Vorrichtung ein der Schweißvorrichtung gegenüberliegendes Andrückelement auf. Zwischen der Schweißvorrichtung und dem Andrückelement ist ein Schweißbereich ausgebildet, in dem die Aufreißlasche zusammen mit der Kunststofffolie zum Verschweißen angeordnet wird. Ferner ist eine Schließvorrichtung vorgesehen, um das Andrückelement und die Schweißvorrichtung relativ zueinander zu bewegen und hierdurch zum Verschweißen den Schweißbereich zu verschließen.

Vorzugsweise ist das Andrückelement massiv ausgebildet und dient gleichzeitig als Amboss, sowie Reflektionselemente, Der Amboss dient als Gegenstück zu der Sonotrode, die in bevorzugter Ausführungsform ein Teil der Schweißvorrichtung ist. Der Amboss ist vorzugsweise auswechselbar. Hierzu ist der Amboss bzw. das Andrückelement in einem Halteelement montiert, so dass beim Auftreten von Verschleiß ein einfaches Auswechseln möglich ist.

Um erfindungsgemäß eine PVDC-freie Kunststofffolie verwenden zu können und/oder um ein verbessertes Aufreißen der Lebensmittel- oder Chemieverpackung zu ermöglichen, ist mit dem Andrückelement und/oder der Schweißvorrichtung ein Verdrängungselement verbunden. Durch das Verdrängungselement wird während des Schweißvorgangs ein Teil des Kunststoffmaterials der Verpackungshülle und/oder der Aufreißlasche verdrängt. Durch das Verdrängungselement erfolgt somit ein Verjüngen der Kunststofffolien, so dass eine definierte Trennnaht hergestellt ist.

Vorzugsweise handelt es sich bei der die Verpackungshülle ausbildenden Kunststofffolie sowie auch bei der Aufreißlasche um eine Kunststoffverbundfolie. Die einzelnen Schichten der Kunststoffverbundfolie sind hierbei derart gewählt, dass eine Schicht eine höhere Schmelztemperatur als die anderen Schichten aufweist. Somit kann der Schweißvorgang derart eingestellt werden, dass die Schicht mit der höheren Schmelztemperatur nicht aufschmilzt, insbesondere aber sämtliche übrigen Schichten aufschmelzen und somit durch das Verdrängungselement bezogen auf die Trennnaht nach außen verdrängt werden können. Insbesondere sind die einzelnen Schichten der die Verpackungshülle ausbildenden Kunststofffolien derart gewählt, dass die Kunststofffolie während des Schweißvorgangs vollständig verdrängt wird. Die Schichten der Aufreißlasche, die vorzugsweise zwei Schichten aufweist, sind vorzugsweise derart ausgewählt, dass nur eine Schicht nicht verdrängt wird. Im Bereich der Trennnaht sind somit in bevorzugter Ausführungsform sämtliche Kunststoffschichten bis auf eine verdrängt.

Da das Verdrängen vorzugsweise durch Aufschmelzen und gleichzeitiges Wegdrücken durch das Verdrängungselement erfolgt, erfolgt ein Verbinden der einzelnen Schichten. Hierdurch entsteht die Schweißnaht. Vorzugsweise ist das Verdrängungselement derart ausgebildet, dass die Schweißnaht die Trennnaht vollständig, beispielsweise rahmenförmig umgibt.

Vorzugsweise ist das Verdrängungselement langgestreckt ausgebildet. Das Verdrängungselement ist im Querschnitt, vorzugsweise im Wesentlichen halbkreisförmig ausgebildet, wobei der Querschnitt des Verdrängungselements vorzugsweise in Längsrichtung konstant ist. Das Verdrängungselement weist somit in bevorzugter Ausführungsform eine konvexe Außenkrümmung auf. Beispielsweise weist das Verdrängungselement eine Breite von 0,3 bis 0,7 mm auf. Die Höhe des Verdrängungselements liegt vorzugsweise im Bereich von 0,2 bis 0,5 mm.

Bei der Verwendung von PVDC-freien Folien besteht ferner die Problematik, dass eine Hochfrequenz-Schweißung nicht möglich ist, da Hochfrequenzschweißverfahren nur bei Folien mit einem hohen dielektrischen Widerstand eingesetzt werden können. Der dielektrische Widerstand ist beispielsweise nicht ausreichend, wenn als Verpackungshülle eine Kunststoffverbundfolie verwendet wird, die als Sperrschicht Polyamid (PA) und als Siegelschichten Polypropylen (PP) oder Polyethylen (PE) aufweist. Die beispielsweise zweischichtige Aufreißlasche weist als höherschmelzende Schicht hierbei vorzugsweise eine biaxial orientiertes Polyester (BO PET Schicht) auf. Ferner weist die Aufreißlasche eine zweite, bzw. innere in Richtung der Verpackungshülle weisende Schicht auf. Vorzugsweise entspricht das Material dieser Schicht dem Material der Siegelschicht, so dass es sich vorzugsweise um eine PE- oder PP-Schicht handelt. Die Verwendung von Verpackungshüllen mit PP-Schichten ist insbesondere für zu sterilisierende Produkte geeignet, die bis auf ca. 125° erhitzt werden. Derartige Produkte sind auch ohne Kühlung ca. 90 Tage haltbar. Verpackungshüllen mit PE-Schichten sind für zu pasteurisierende Produkte geeignet, die auf etwa 85° erhitzt werden. Derartige Produkt sind mit Kühlung etwa 21 Tage haltbar.

Bei Verwendung von PVDC-freien Folien, insbesondere den vorstehenden PVDC-freien Folien ist die Verwendung von Hochfrequenz-Wellen zum Schweißen nicht möglich, da diese Folien keinen ausreichenden dielektrischen Widerstand aufweisen. Erfindungsgemäß erfolgt das Schweißen somit vorzugsweise durch Ultraschallwellen. Dies erfolgt vorzugsweise mit Hilfe der vorstehend beschriebenen Schweißvorrichtung, die Ultraschallwellen erzeugt und insbesondere einen Generator, einen Konverter, eine Sonotrode und einen Amboss aufweist. Durch eine schwingende Sonotrode werden die entsprechenden Ultraschallwellen in das Material eingebracht. Die hierbei durch Reibung entstehende Wärme führt zum Aufschmelzen der entsprechenden Schichten. Um ein Aufschmelzen zumindest einer Schicht zu vermeiden, ist es erforderlich, die Schweißparameter entsprechend zu wählen. Hierbei handelt es sich insbesondere um den während des Schweißens erzeugten Druck, die Schweißzeit und die Frequenz sowie die Amplitude der Schallwellen. Die Schweißparameter werden hierbei derart gewählt, dass eine Schicht der beiden Kunststofffolien, insbesondere eine Halteschicht der Aufreißlasche nicht aufgeschmolzen wird. Bei der Halteschicht handelt es sich vorzugsweise um die äußere Schicht, dass heißt die von der Verpackungshülle wegweisende Schicht der Aufreißlasche.

Bei einer besonders bevorzugten Ausführungsform der Vorrichtung zum Anbringen der Aufreißlasche auf der Verpackungshülle aus Kunststofffolie ist eine Haltevorrichtung zum Halten der Aufreißlasche in dem Schweißbereich vorgesehen. Hierdurch ist gewährleistet, dass eine auch optisch einwandfreie Schweißnaht sowie Trennnaht hergestellt wird. Beispielsweise ist es wünschenswert, dass bei einer rechteckigen Aufreißlasche die Trennnaht parallel zu einer Außenkante der Kunststoffflasche verläuft.

Vorzugsweise weist die Haltevorrichtung Ansaugelemente auf. Bei den Ansaugelementen handelt es sich vorzugsweise um rohrförmige Elemente oder Bohrungen, die mit Unterdruck beaufschlagt werden. Hierdurch ist es möglich, die Aufreißlasche an die Öffnungen anzusaugen. Auch kann eine Ansaugplatte mit einer Perforation vorgesehen sein.

Da beim Verwenden einer Sonotrode Schwingungen auftreten, kann ggf. während des Schweißens trotz des Vorsehens einer Haltevorrichtung ein Verrutschen der Aufreißlasche erfolgen. Um dies zu vermeiden, ist vorzugsweise zusätzlich eine Fixiervorrichtung vorgesehen, durch die die Aufreißlasche im Schweißbereich während des Schweißvorgangs fixiert wird. Hierzu kann die Fixiervorrichtung beispielsweise stiftartige Fixierelemente aufweisen. Diese sind vorzugsweise verschiebbar und können mit einer Fixierkraft beaufschlagt werden. Beispielsweise wird die Aufreißlasche durch die Fixierelemente gegen einen sich auf Höhe der Oberseite der Sonotrode befindlichen Anschlag gedrückt. Vorzugsweise sind hierzu einander gegenüberliegend jeweils ein Anschlag auf jeder Seite der Sonotrode vorgesehen. Zur Aufbringung einer Fixierkraft können die Fixierelemente federbelastet sein.

Bei einer besonders bevorzugten Ausführungsform sind die Fixierelemente derart ausgebildet, dass sie gleichzeitig als Ansaugelemente dienen. Hierzu ist es möglich, als Fixierelemente rohrförmige Elemente zu verwenden. Der innere Hohlraum dieser Elemente ist sodann mit einer Unterdruckquelle verbunden, so dass über die Öffnung der Fixierelemente ein Ansaugen der Aufreißlaschen und somit ein Halten der Aufreißlaschen erfolgt. Besonders bevorzugt ist es daher, statt einer gesonderten Haltevorrichtung und einer gesonderten Fixiervorrichtung eine gemeinsame Halte- und Fixiervorrichtung vorzusehen. Hierdurch ist der Aufbau der erfindungsgemäßen Vorrichtung deutlich vereinfacht und die Anzahl der Bauteile reduziert. Vorzugsweise ist die Halte- und Fixiervorrichtung innerhalb des Andrückelements angeordnet. Zusätzlich kann die erfindungsgemäße Vorrichtung eine Zuführvorrichtung zum Zuführen der Aufreißlaschen in den Schweißbereich aufweisen. Hierbei ist es möglich, einzelne Aufreißlaschen gesondert zuzuführen. Vorzugsweise weist die Zuführvorrichtung jedoch eine Schneidvorrichtung auf, so dass es möglich ist, ein Folienband zuzuführen, wobei durch Schneidung des Folienbandes die Aufreißlaschen hergestellt werden. Durch das Vorsehen eines beispielsweise auf einer Rolle angeordneten Folienbands ist das Zuführen deutlich vereinfacht. Vorzugsweise wird zunächst von dem Folienband ein als Aufreißlasche dienender Streifen abgeschnitten und anschließend in dem Schweißbereich durch die Fixiervorrichtung gehalten, insbesondere angesaugt. In bevorzugter Ausführungsform wird die gesamte Schweißvorrichtung, beispielsweise durch Vorsehen einer Lineareinheit zusammen mit der Verpackungsfolie verfahren. Vorzugsweise wird die Schneideinrichtung nicht mit verfahren, sondern ortsfest angeordnet.

Ferner betrifft die Erfindung eine Lebensmittel- oder Chemieverpackung , die vorzugsweise mit der vorstehend beschriebenen Vorrichtung hergestellt ist. Die Lebensmittel- oder Chemieverpackung ist üblicherweise schlauchförmig ausgebildet und weist eine Verpackungshülle aus Kunststoffverbundmaterial auf. Das Kunststoffverbundmaterial ist vorzugsweise mindestens dreischichtig, wobei eine mittlere Schicht als Sperrschicht ausgebildet ist. Bei der Sperrschicht handelt es sich in bevorzugter Ausführungsform um eine Polyamid-Schicht (PA), EVOH oder aluminisierter Schicht. Auf beiden Seiten ist die PA-Schicht mit einer Siegelschicht versehen. Je nach Anwendungsfall kann es sich bei den Siegelschichten um PP-Schichten oder PE-Schichten handeln. Hierbei werden PP-Schichten bei zu sterilisierenden Produkten verwendet, die bis zum 125° erhitzt werden und PE-Schichten bei zu pasteurisierenden Produkten, die bis ca. 85° erhitzt werden.

Üblicherweise wird die Kunststoffverbundfolie zur Herstellung einer schlauchförmigen Verpackungshülle zu einem Schlauch geformt und durch eine Längssiegelnaht verschlossen. Die Siegel werden durch einen Schweißvorgang hergestellt, bei dem die aneinanderliegenden Siegelschichten durch Aufschmelzen miteinander verbunden werden.

Die erfindungsgemäße Lebensmittel- oder Chemieverpackung weist ferner eine Aufreißlasche auf. Die Aufreißlasche wird durch einen Schweißvorgang mit der Verpackungshülle verbunden. Hierbei erfolgt das Verbinden der Aufreißlasche mit der Verpackungshülle üblicherweise vor dem Herstellen eines Schlauches, sofern es sich um eine schlauchförmige Verpackungshülle handelt. Schlauchförmige Verpackungshüllen können durch Clips, insbesondere Aluminiumclips an ihren Enden verschlossen werden.

Erfindungsgemäß erfolgt das Verbinden der Aufreißlasche mit der Verpackungshülle derart, dass eine Trennnaht ausgebildet ist. Hierzu weist die Aufreißlasche, bei der es sich vorzugsweise ebenfalls um eine Kunststoffverbundfolie handelt, eine Halteschicht auf. Die Halteschicht weist eine verglichen mit den übrigen Schichten, dass heißt den Schichten der Verpackungshülle und der, bzw. den ggf. vorgesehenen weiteren Schichten der Aufreißlasche höhere Schmelztemperatur auf. Beim Verbinden der Aufreißlasche mit der Verpackungshülle durch den Schweißvorgang werden somit alle Schichten, bis auf die Halteschicht, aufgeschmolzen und verdrängt. Die Lebensmittelverpackung ist somit im Bereich der Aufreißlasche an der Trennnaht nur durch die Halteschicht verschlossen. Durch eine derartige Querschnittsverringerung im Bereich der Trennnaht kann die Lebensmittelverpackung durch einfaches Ziehen an der Aufreißlasche geöffnet werden.

Vorzugsweise handelt es sich bei der Halteschicht um die äußere Schicht der Aufreißlasche. Bei einer Halteschicht aus BO PET haben Versuche gezeigt, dass die Diffusionsrate von Sauerstoff durch die Verpackung nicht beeinträchtigt wird. Zumindest konnte eine Beeinträchtigung bei einer hohen Genauigkeit des Messverfahrens nicht nachgewiesen werden.

Vorzugsweise weist die Aufreißlasche eine zweite Schicht auf, so dass es sich bei der Aufreißlasche um eine Kunststoffverbundfolie mit mindestens zwei Schichten handelt. Die innenliegende Schicht, dass heißt die in Richtung der Verpackungshülle weisende Schicht der Aufreißlasche wird beim Schmelzvorgang aufgeschmolzen. Insbesondere ist das Material der innenliegende Schicht mit der Siegelschicht der Verpackungshülle, dass heißt einer in Richtung der Aufreißlasche weisenden Schicht der Verpackungshülle identisch, um ein gutes Verbinden der beiden Schichten miteinander durch Aufschmelzen zu gewährleisten.

Durch das Verdrängen sämtlicher Schichten der Verpackungshülle und sämtlicher Schichten der Aufreißlasche mit Ausnahme der Halteschicht erfolgt eine Materialansammlung um die Trennnaht herum. Das aufgeschmolzene Material um die Trennwand herum verbindet sich beim Erkalten, so dass eine die Trennnaht umgebende Schweißnaht ausgebildet. Insbesondere ist die Schweißnaht rahmenförmig bzw. rechteckig ausgebildet.

Die vorstehend beschriebene Vorrichtung zum Anbringen einer Aufreißlasche, sowie die Verpackung mit Aufreißlasche ist nicht nur zur Aufbewahrung von Lebensmitteln, sondern auch zur Aufbewahrung chemischer Produkte oder anderen Produkten, bei denen ein einfaches Öffnen der Verpackung durch Entfernen der Aufreißlasche vorteilhaft ist, geeignet.

Die Siegelschicht der Aufreißlasche weist vorzugsweise eine sogenannte Peel-Eigenschaft auf. Hierdurch ist beim Aufschmelzen der Siegelschicht ein Delaminieren des Materials vermieden. Würde ein Delaminieren auftreten, würde die optische Ausgestaltung der Schweißnaht nicht sauber und dadurch häufig vom Kunden nicht akzeptiert. Ferner wird ggf. ein Aufreißen der Folie erschwert.

Ein wesentliches Merkmal der Erfindung ist in bevorzugter Ausführungsform, dass die entstehende Schweißnaht in sich geschlossen ist. Insbesondere ist die Schweißnaht rechteckig ausgebildet. Hierdurch ist die erforderliche Abdichtung gewährleistet.

Ein weiterer wesentlicher Aspekt der Erfindung ist in bevorzugter Ausführungsform, darin zu sehen, dass nur eine kurzzeitige und/ oder punktuelle Wärmeeinbringung durch Ultraschall erfolgt. Dies hat den Vorteil, dass ein Aufschmelzen der Folie in der Umgebung der Schweißnaht und damit ein Verziehen der Folie vermieden ist.

Vorzugsweise besteht ein weiterer wesentlicher Aspekt der Erfindung darin, dass das Schweiß- und/ oder Verdrängungselement von der Seite der Aufreißlasche aufgedrückt wird. Da die Aufreißlasche vorzugsweise nicht oder nur teilweise aufschmilzt, ist ein Verschmelzen des Verdrängungselements vermieden.

Weiter ist es bevorzugt, dass die Trennnähte quer zur Transportrichtung hergestellt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht eines in einer schlauchförmigen Verpackung verpackten Lebensmittels,
- Fig. 2: eine vergrößerte Ansicht der Lebensmittelverpackung im Bereich der Aufreißlasche,
- Fig. 3: eine schematische Schnittansicht entlang der Linie III - III in Fig. 2,
- Fig. 4: eine schematische Draufsicht der Vorrichtung zum Anbringen einer Aufreißlasche,
- Fig. 5: eine schematische Schnittansicht entlang der Linie V-V, und
- Fig. 6: eine schematische Teil-Schnittansicht der in Fig. 4 dargestellten Vorrichtung aus der die Zuführvorrichtung für die Aufreißlaschen ersichtlich ist.

Ein Lebensmittel, wie Wurst, kann in einer schlauchförmigen Verpackungshülle 10 vertrieben werden. Die schlauchförmige Verpackungshülle 10 ist an ihren Enden mit beispielsweise aus Aluminium hergestellten Verschließclips 12 verschlossen. Zum Öffnen der Verpackungshülle 10 ist eine Aufreißlasche 14 mit dieser durch Verschweißen verbunden, wobei eine Trennnaht 16 ausgebildet ist. Durch Entfernen der Aufreißlasche 14 erfolgt ein Aufreißen der Verpackungshülle 10 entlang der Trennnaht 16.

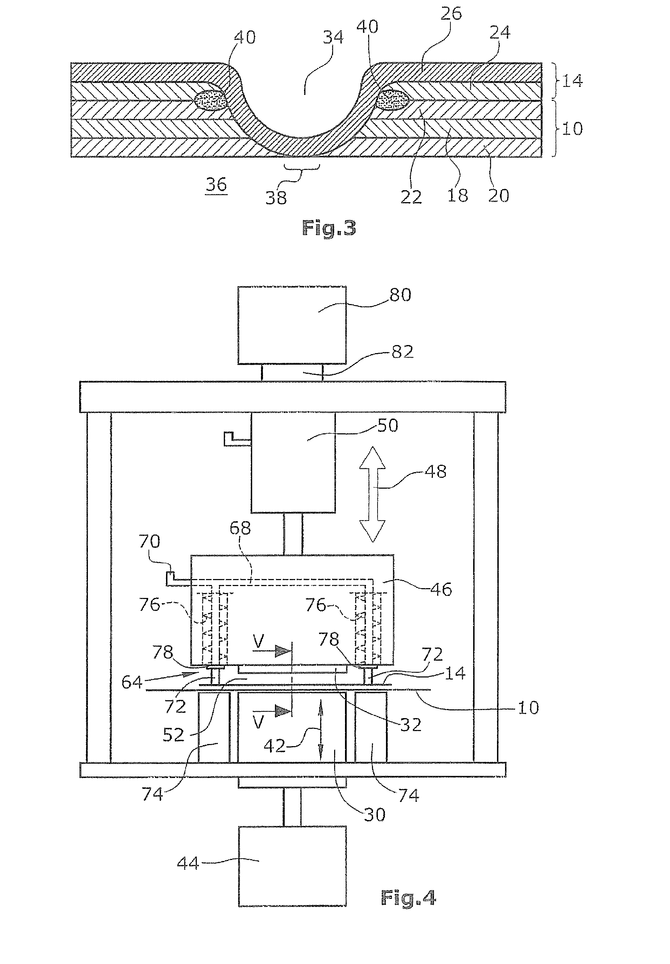

Bei der Verpackungshülle 10 handelt es sich im dargestellten Ausführungsbeispiel um eine Kunststoffverbundfolie mit drei Schichten (Fig. 3). Eine mittlere Sperrschicht 18 ist mit zwei Siegelschichten 20, 22 bedeckt. Die Sperrschicht 18 ist beispielsweise aus Polyamid (PA), EVOH oder Aluminium. Die beiden Siegelschichten 20, 22 sind beispielsweise aus Polypropylen (PP) oder Polyethylen (PE), je nachdem ob es sich um ein zu sterilisierendes Produkt oder ein zu pasteurisierendes Produkt handelt.

Die Aufreißlasche 14 ist im dargestellten Ausführungsbeispiel ebenfalls aus einer Kunststoffverbundfolie hergestellt. Diese weist zwei Schichten auf. Eine innenliegende Schicht 24, die in Richtung der Verpackungshülle 10 weist, ist aus PP oder PE hergestellt. Das Material der Schicht 24 entspricht dem Material der Schicht 22. Die zweite Schicht der Aufreißlasche 14 ist die von der Verpackungshülle 10 wegweisende Halteschicht 26. Die Halteschicht 26 besteht im dargestellten Ausführungsbeispiel aus biaxial orientiertes Polyester (BO PET Schicht).

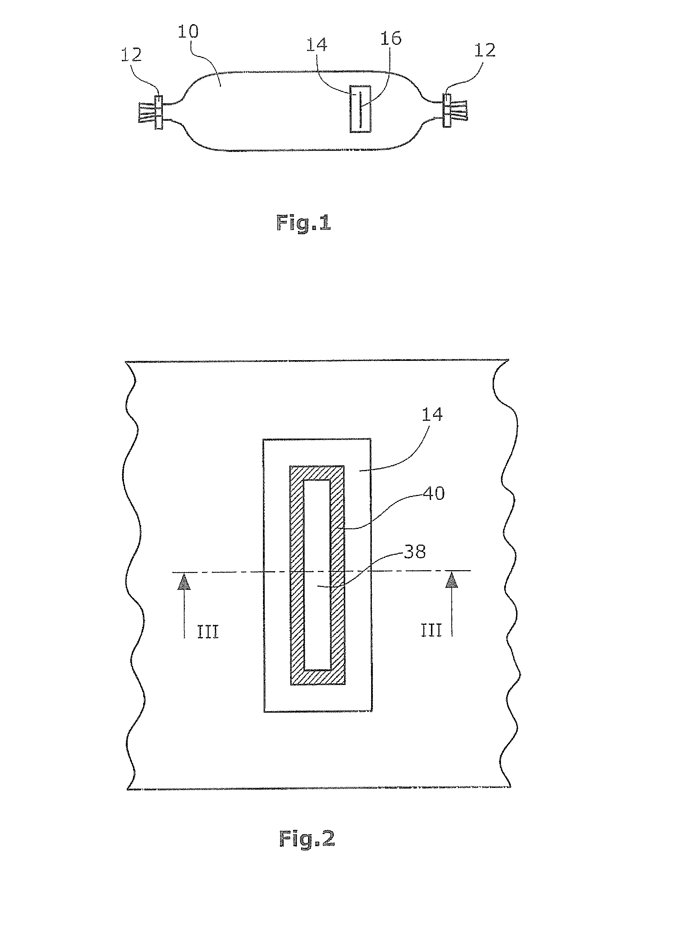

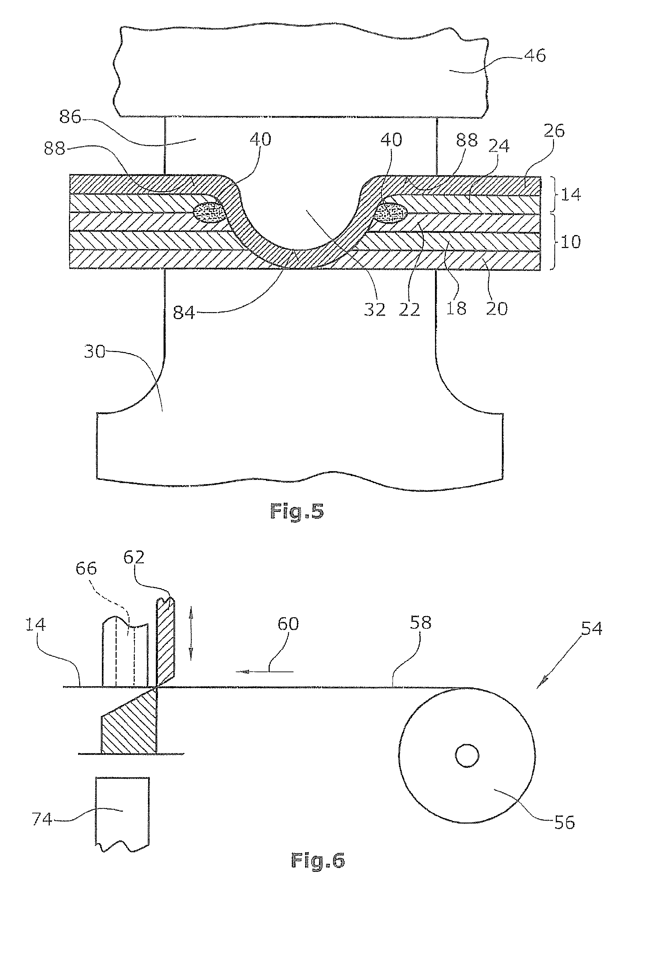

Beim Verbinden der Aufreißlasche mit der Verpackungshülle 10 erfolgt ein Aufschmelzen der Schichten 24, 22, 18, 20. Lediglich die BO PET-Schicht 26 wird nicht aufgeschmolzen, da diese eine höhere Schmelztemperatur als die übrigen Schichten hat. Das Verschweißen der beiden Folien 10, 14 erfolgt wie nachfolgend anhand der Vorrichtung beschrieben wird, mittels einer Sonotrode 30 und einem der Sonotrode gegenüberliegenden Verdrängungselement 32 (Fig. 5). Auf Grund der Ausgestaltung des Verdrängungselements 32 entsteht ein freier Bereich 34 (Fig. 3). In diesem Bereich ist die BO PET-Schicht 26 in Richtung einer Innenseite 36 der Verpackungshülle 10 verformt. Durch das Verdrängungselement 32 wird das Material der aufschmelzenden Schichten 24, 22, 18, 20 verdrängt, so dass im Bereich einer Trennnaht 38 nur noch die BO PET-Schicht 26 vorgesehen ist. Durch die Verdrängung der aufgeschmolzenen Schichten 24, 22, 18, 20 erfolgt unmittelbar benachbart zu der BO PET-Schicht 26 ein Vermischen der Schichten 24 und 22, so dass eine Schweißnaht 40 entsteht. Die Schweißnaht 40 umgibt die Trennnaht 38 rahmenförmig (Fig. 2). Die Schichten 18 und 20 werden verdrängt.

Eine Vorrichtung zum Anbringen einer Aufreißlasche 14 wird anhand einer in den Fign. 4 bis 6 schematisch dargestellten bevorzugten Ausführungsform im Folgenden näher erläutert.

Eine Schweißvorrichtung 30 erzeugt im dargestellten Ausführungsbeispiel Ultraschallwellen zum Verschweißen der Aufreißlasche 14 mit der Kunststofffolie 10. Hierzu ist im dargestellten Ausführungsbeispiel eine Sonotrode 30 mit einem Konverter 44 verbunden. Der Konverter 44 ist mit einem nicht dargestelltem Generator zur Erzeugung einer elektrischen Schwingung verbunden. Der Konverter 44 weist mindestens einen Piezokristall zum konvertieren der elektrischen Schwingungen in eine Ultraschallwelle auf. Der Sonotrode 30 gegenüber liegend ist ein Andrückelement 46 vorgesehen. Bei dem Andrückelement 46 handelt es sich in bevorzugter Ausführungsform um ein Halteelement, das das Verdrängungselement 32 hält. In der dargestellten Ausführungsform dient das Verdrängungselement 32 ferner als Amboss, so dass das Andrückelement 46 zusätzlich als Ambosshalter dient. Auf einer der Sonotrode zugewandten Seite des Andrückelements 46 ist das Verdrängungselement 32 angeordnet. Das Andrückelement 46 ist zum Verfahren in Richtung eines Pfeils 48 mit einer Schließvorrichtung 50, wie einem Pneumatikzylinder verbunden. Durch Betätigen der Schließvorrichtung 50 erfolgt ein Öffnen und Schließen eines Schweißbereichs 52, der zwischen der Sonotrode 30 und dem Andrückelement 46 bzw. dem Verdrängungselement 32 ausgebildet ist.

In dem Schweißbereich 52 ist die Verpackungshülle 10, sowie die Aufreißlasche 14 angeordnet.

Das Zuführen der Aufreißlasche 14 erfolgt vorzugsweise über eine Zuführeinrichtung 54 (Fig. 6). Die Zuführeinrichtung 54 weist beispielsweise eine nicht dargestellte Transporteinrichtung wie einen Elektromotor auf, der eine Rolle 56 dreht. Durch Drehen der Rolle 56 erfolgt ein Bewegen eines Folienbandes 58 in Richtung eines Pfeils 60. Hierdurch wird das freie Ende der Folienbahn 58 in den Schweißbereich 52 geschoben. Mit Hilfe einer Schneidvorrichtung 62 erfolgt ein Abschneiden der Aufreißlasche 14. Hierbei ist in Fig. 6 die Schmalseite der Aufreißlasche 14 sichtbar.

Nach dem Abschneiden der Aufreißlasche 14 wird diese von einer Haltevorrichtung gehalten, wobei im dargestellten Ausführungsbeispiel die Haltevorrichtung auch als Fixiervorrichtung (siehe unten) dient, so dass eine gemeinsame Halte- und Fixiervorrichtung 64 vorgesehen ist. Die Halte- und Fixiervorrichtung 64 weist Ansaugelemente 66 auf, bei denen es sich im dargestellten Ausführungsbeispiel um zwei Kanäle handelt, die über einen im Andrückelement 46 vorgesehenen Querkanal 68 mit einem Unterdruckanschluss 70 verbunden sind.

Anschließend verfährt die Schweißeinheit in Richtung der Transportrichtung der Verpackungshülle bis die relative Geschwindigkeit gleich Null ist. Der Schweißbereich 52 wird durch Verfahren des Andrückelements 46 in Fig. 4 nach unten geschlossen. Hierbei drücken Fixierelemente 72, in denen die Ansaugelemente bzw. Ansaugkanäle 66 angeordnet sind, die Aufreißlasche 14 gegen Gegendruckhalter 74 (Fig. 4).

Um ein Verrutschen der Aufreißlasche während des Schweißvorgangs zu verhindern, wird auf die Fixierelemente 72 eine Fixierkraft ausgeübt, durch die die Aufreißlasche 14 mit zusätzlicher Kraft gegen die Gegendruckhalter 74 gedrückt werden. Die Fixierkraft wird im dargestellten Ausführungsbeispiel durch Federn 76, die in Sackbohrungen des Ansaugelements vorgesehen sind, hervorgerufen. Hierzu weisen die Fixierelemente 72 einen beispielsweise ringförmigen Ansatz 78 auf, durch den die Federn 76 beim Schließen des Schweißbereichs 52 zusammengedrückt werden.

Die in dem dargestellten Ausführungsbeispiel in besonders bevorzugter Weise miteinander kombinierte Halte- und Fixiervorrichtung umfasst somit eine Haltevorrichtung, die das rohrförmigen Element 72, den hierin angeordneten Kanal 66 und eine nicht dargestellte Unterdruckquelle aufweist und eine Fixiervorrichtung, die die Fixierelemente 72, die Gegendruckhalter 74, sowie die Federn 76 aufweist.

Nachdem der Schweißbereich 52 verschlossen ist, wird über den Konverter 44 Ultraschall erzeugt und über die die Sonotrode 30 verstärkt. Bei hohen Taktzahlen, läuft der Generator im Dauerbetrieb, d.h. es wird kontinuierlich Ultraschall erzeugt. Auf Grund des Ultraschalls erfolgt ein Erwärmen der einzelnen Schichten der Verpackungshülle 10 sowie der Aufreißlasche 14. Der aufgebrachte Druck, die Frequenz und Amplitude der Schaltwellen, sowie die Einwirkzeit werden hierbei derart gewählt, dass die Halteschicht 26 (Fig. 3) der Aufreißlasche 14 nicht aufschmilzt. Die übrigen Schichten schmelzen auf und bilden eine Schweißnaht 40. Auf Grund der konvex ausgestalteten Außenkrümmung 84 (Fig. 5) des Verdrängungselements 32 erfolgt ein Verdrängen des aufgeschmolzenen Materials, so dass im Bereich der Trennnaht 38 nur noch die PET-Schicht 26 vorgesehen ist.

Wie ferner aus Fig. 5 ersichtlich ist, geht das Verdrängungselement 32 in einen Block 86 über. Dieser weist Anlagenflächen 88 auf, an denen die Aufreißlasche 14 anliegt, um die Qualität der Schweißnaht zu verbessern.

Da die Aufreißlasche 14 während des Transports der Verpackungshülle 10 aufgeschweißt wird, wird die gesamte in der Fig. 4 dargestellte Vorrichtung mit Hilfe einer Linearführung 80 und einem Gleitblock 82 senkrecht zur Zeichenebene der Fig. 4 bewegt. Anstelle eines Gleitblocks 82 können auch Kugelumlaufschlitten vorgesehen sein. Diese sind besonders gut zur Aufnahme der hohen Beschleunigungen und Geschwindigkeiten geeignet.

## Patentansprüche

1. Vorrichtung zum Anbringen einer Aufreißlasche (14) auf einer Lebensmittel- oder Chemieverpackung aus Kunststofffolie, mit
einer Schweißvorrichtung (30) zum Erzeugen einer, die Aufreißlasche (14) mit der Kunststofffolie (10) verbindenden Schweißnaht (40),
einem der Schweißvorrichtung (30) gegenüberliegenden Andrückelement (46),
einem zwischen der Schweißvorrichtung (30) und dem Andrückelement (46) vorgesehenen Schweißbereich (52), in dem die Aufreißlasche (14) und die Kunststofffolie (10) zum Verschweißen angeordnet sind, und einer Schließvorrichtung (50) zum Bewegen des Andrückelements (46) und/oder der Schweißvorrichtung (30) relativ zueinander,
wobei mit dem Andrückelement (46) und/oder der Schweißvorrichtung (30) ein Verdrängungselement (32) zum Verdrängen eines Teils der Kunststofffolie (10) und vorzugsweise eines Teils des Kunststoffmaterials der Aufreißlasche (14) während des Schweißvorgangs verbunden ist,
**gekennzeichnet durch**
eine Haltevorrichtung (64, 66, 68, 70) zum Halten der Aufreißlasche (14) in dem Schweißbereich (52).

2. Vorrichtung nach Anspruch 1, **dadurch gekennzeichnet, dass** die Haltevorrichtung (64, 66, 68, 70) ein Ansaugelement (66) aufweist.

3. Vorrichtung nach Anspruch 1 oder 2, **gekennzeichnet durch** eine Fixiervorrichtung (72, 74, 76) zum Fixieren der Aufreißlasche (14) in dem Schweißbereich während des Schweißvorgangs.

4. Vorrichtung nach Anspruch 3, **dadurch gekennzeichnet, dass** die Fixiervorrichtung (72, 74, 76) verschiebbare Fixierelemente (72) aufweist.

5. Vorrichtung nach Anspruch 4, **dadurch gekennzeichnet, dass** die Fixierelemente (72) mit einer Fixierkraft beaufschlagbar sind, die vorzugsweise durch wenigstens eine Feder (76) erzeugt wird.

6. Vorrichtung nach Anspruch 4 oder 5, **dadurch gekennzeichnet, dass** die Fixierelemente (72) zur Ausbildung der Ansaugelemente (66) hohl ausgebildet sind.

7. Vorrichtung nach einem der Ansprüche 2 bis 6, **dadurch gekennzeichnet, dass** die Haltevorrichtung (64, 66, 68, 70) und die Fixiervorrichtung (72, 74, 76) als gemeinsame Halte- und Fixiervorrichtung (64) ausgebildet sind.

8. Vorrichtung nach einem der Ansprüche 1 bis 7, **dadurch gekennzeichnet, dass** die Halte- und/oder Fixiervorrichtung (64) innerhalb des Andrückelements (46) angeordnet sind.

9. Vorrichtung nach einem der Ansprüche 1 bis 8, **gekennzeichnet durch** eine Zuführvorrichtung (54) zum Zuführen der Aufreißlasche (14) in den Schweißbereich (52).

10. Vorrichtung nach Anspruch 9, **dadurch gekennzeichnet, dass** die Zuführvorrichtung (54) eine Schneidvorrichtung (62) zum Abtrennen von Aufreißlaschen (14) von einem Folienband (58) aufweist.

11. Vorrichtung nach einem der Ansprüche 1 - 10, **dadurch gekennzeichnet, dass** das Verdrängungselement (32) derart ausgebildet ist, dass die gesamte Kunststofffolie bzw. Verpackungshülle (10) verdrängt wird, so dass eine Trennnaht (38) entsteht, wobei die Trennnaht (38) vorzugsweise von der Schweißnaht (40) umgeben ist.

12. Vorrichtung nach Anspruch 11, **dadurch gekennzeichnet, dass** das Verdrängungselement (32) derart ausgebildet ist, dass ein Teil des Kunststoffmaterials (24) der Aufreißlasche (14) verdrängt wird.

13. Vorrichtung nach einem der Ansprüche 1 bis 12, **dadurch gekennzeichnet, dass** das Verdrängungselement (32) zur Ausbildung einer Trennnaht (38) langgestreckt ausgebildet ist.

14. Vorrichtung nach einem der Ansprüche 1 bis 13, **dadurch gekennzeichnet, dass** das Verdrängungselement (32) ein konvexe Außenkrümmung (84) aufweist.

15. Vorrichtung nach einem der Ansprüche 1 bis 14, **dadurch gekennzeichnet, dass** die Schweißvorrichtung (30) Ultraschallwellen erzeugt.
